# EUROPEAN PATENT APPLICATION

(11) **EP 2 337 356 A2**
(43) Date of publication of application: **22.06.2011**
(21) Application number: 10194246.4
(22) Date of filing: 08.12.2010
(51) Int. Cl.: H04N 7/18, G08B 13/196

(54) **System and method of associating video cameras with respective video servers**

(30) Priority: 21.12.2009 US 643643
(71) Applicant: Honeywell International Inc., Morristown, NJ 07962 (US)
(72) Inventor: Jain, Abhishek, 560085, Bangalore, Karnataka (IN); Sharma, Ravi, 246701, Uttar Pradesh (IN)
(74) Representative: Buckley, Guy Julian

(57) **Abstract**

A regional video monitoring system includes a plurality of video surveillance cameras as well as a plurality of video servers. The cameras and servers are linked by an interface which can automatically allocate one or more cameras among one or more servers. The interface can respond to a server failure and reallocate the cameras among remaining operable servers.

## Description

### FIELD

The invention pertains to security systems which include video surveillance cameras. More particularly, the invention pertains to such systems, and associated methods where cameras can be automatically associated with a respective server, and the user need not make the association.

### BACKGROUND

A typical Network Video Recorder (NVR) system in the surveillance industry consists of many video servers and cameras. The cameras are configured to the different video servers present in the NVR system at a particular moment. The cameras are tightly associated with a particular video server.

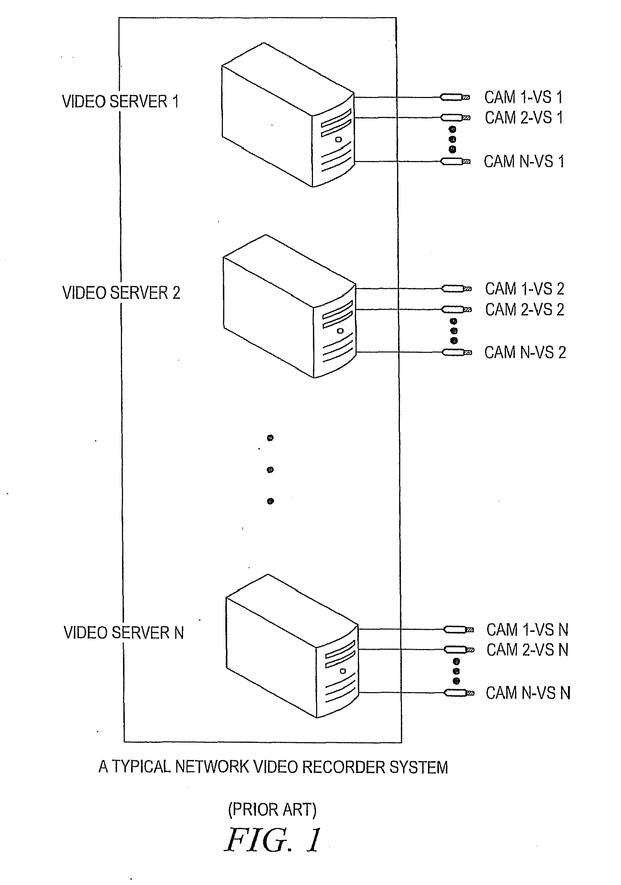

Fig. 1 illustrates a known system configuration. As illustrated in Fig. 1, a plurality of video cameras is associated with a predetermined video server.

There are various problems with the design of Fig. 1. For Example, if there is a problem in any video server, none of the cameras associated to that video server can be monitored. Further, a user, who configures the cameras in the NVR system, needs to be experienced enough to decide which camera to associate to which video server. If there is a load balancing problem in the NVR system, a user has to change the association of the cameras to other video servers manually. This is a tedious job when there are numerous cameras configured in the NVR system. Relatively skilled users are required to do this task.

There is thus a continuing need to provide improved and more convenient ways in which the video cameras could be associated with a selected server.

### BRIEF DESCRIPTION OF THE DRAWINGS

Fig. 1 illustrates a known configuration of video cameras and servers;

Fig. 2 illustrates a configuration of video cameras and servers in accordance with the invention;

Fig. 2A a block diagram of an interface usable in the configuration of Fig. 2; and

Fig. 3 is a flow diagram of a method in accordance with the invention.

### DETAILED DESCRIPTION

While embodiments of this invention can take many different forms, specific embodiments thereof are shown in the drawings and will be described herein in detail with the understanding that the present disclosure is to be considered as an exemplification of the principles of the invention, as well as the best mode of practicing same, and is not intended to limit the invention to the specific embodiment illustrated.

In embodiments of the invention, a surveillance system is provided where a camera will be configured relative to a network video recorder (NVR) system rather than to a video server. The underlying architecture of NVR system will implement the dynamic association of the cameras and the video servers. In one aspect of the invention, there is no need for the user to choose an appropriate video server from available video servers.

A logical layer can be provided as an interface to a plurality of video servers. This interface can associate the cameras with the video servers. This association can be maintained dynamically based on the different run time scenarios in the NVR system. The logical layer, or interface, will interact with other components of this NVR system and keep track of the dynamic association of cameras and video servers.

Thus, as described above, embodiments of the invention address Video Server Failure. In case one video server is down in the NVR system, cameras associated with this video server can be reassigned to other video servers. Hence, those cameras will also be monitored. Automatic load sharing among video servers results in an allocation process where loads will be distributed optimally among all video servers in the NVR system. In case, any one video server becomes overloaded, its associated cameras (and hence load) can be shared by others.

Additionally, users can easily add more cameras. Where a user wants to add new cameras into the NVR system, he/she does not need to worry about which video server to choose. The video system interface will automatically process and then make this selection. This will reduce user efforts as well as chances of common mistakes while choosing the video servers. Further embodiments facilitate system changes and modifications. In existing NVR systems, users at times need to change the number of cameras and settings (e.g. deleting / adding cameras or change in the camera configurations). Such changes in known system require manual adjustments and efforts to ensure that the resulting system is optimal. Embodiments of the invention will automatically change the required association settings to utilize the video server resources optimally.

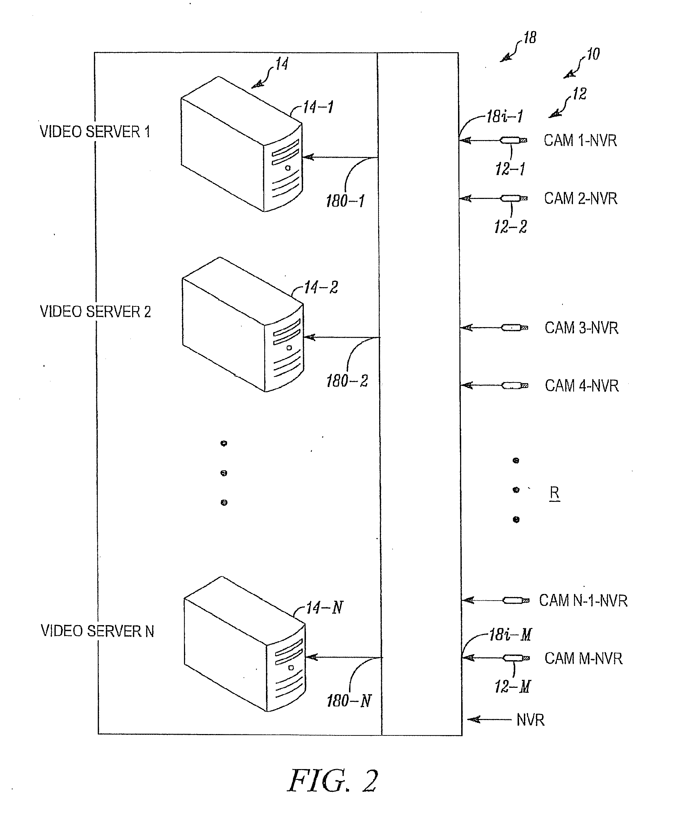

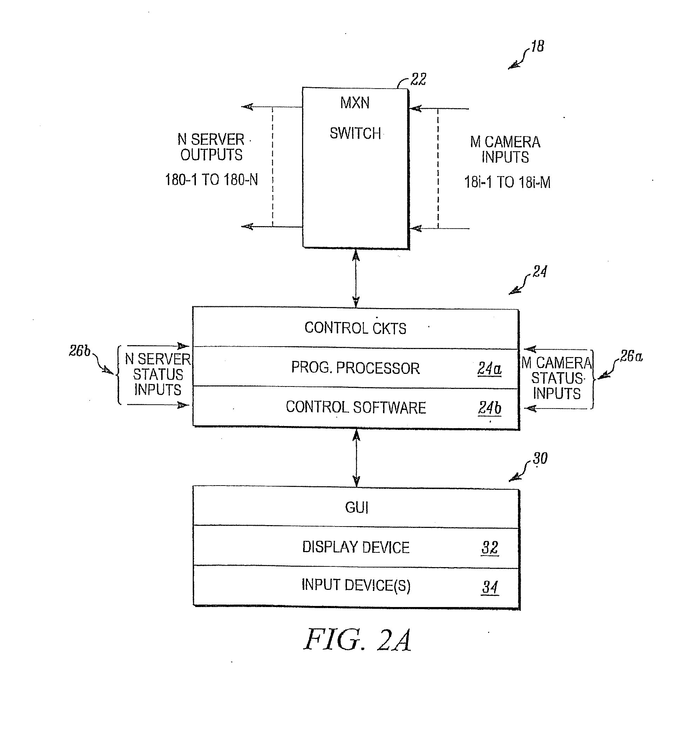

Fig. 2 illustrates a surveillance system 10 which embodies the present invention. System 10 can be installed to monitor a region R and provide real-time and on-going video information relative thereto.

System 10 includes a plurality of video cameras 12 which can be distributed throughout the region R. The members of the plurality 12, such as 12-1, -2...-M can be digital or analog without limitation. The details of the cameras are not limitations of the invention.

System 10 also includes a network video recording system NVR. The recording system NVR includes a plurality of video servers 14 and an interface 18.

The interface 18 includes a plurality of camera input ports 18i-1...-M and a plurality of video server output ports 180-1...-N. Interface 18 automatically associates a camera, such as 12-I with a video server, such as 14-j. The cameras are thus associated with the over all system NVR and not with a specific server.

In one aspect of the invention, a user can request the NVR system to add a camera by communicating, for example with interface 18. In response thereto, as described in more detail below, the interface 18 will automatically determine which server the camera's output signals are to be allocated to or associated with. Alternately, if one of the servers, such as 14-j fails, the interface 18 can automatically reallocate the cameras associated with that server among the remaining members of the plurality 14.

Fig. 2A illustrates additional details of exemplary interface 18. Interface 18 can include an M x N matrix switch 22 having M camera input ports and N server output ports. It will be understood that neither the details of the configuration of the switch 22 nor the specific switch elements therein are limitations of the invention. Output signals from cameras 12 can be coupled to the M input ports of the interface 18. Those signals can be automatically associated with members of the plurality 14 such that all cameras 12 are serviced and their signals are received by a member of the plurality 14 for storage and/or viewing.

The interface 18 can also include control circuits 24 which are coupled to the switch 22 and which automatically establish transmission paths between input ports, such as 18i-j and an associated output port, such as 18o-I. The control circuits 24 can be implemented with one or more programmable processors, such as 24a, and associated control software stored on a computer readable medium 24b. Optional camera status input signals 26a and server status signals 26b can be coupled to the control circuits 24 to enable the control circuits 24 to monitor the functionality and status of each of the cameras 12 and each of the servers 14. Control signals, not shown, can be coupled between the control circuits and each of the cameras and servers.

A graphical user interface 30 can be coupled to the control circuits 24. The interface 30 can include a display device 32 and a user input device, such as a keyboard 34, along with associated control software to enable a user to request that one or more cameras be added, removed or reallocated. Control circuits 24 can also respond to camera associated status inputs 26a or server status inputs 26b as those of skill in the art would understand.

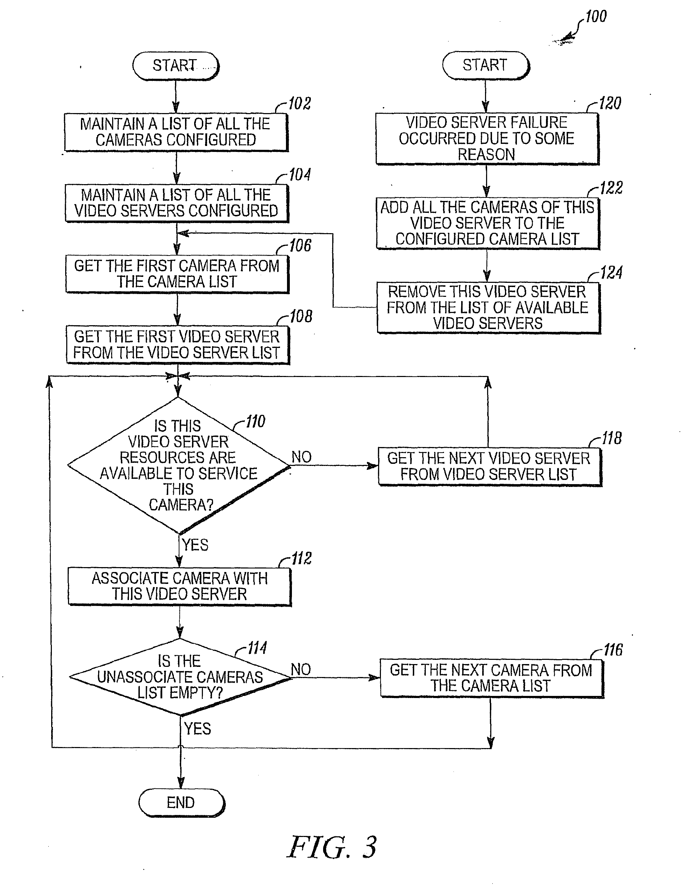

Fig. 3 illustrates exemplary processing 100 which could be carried out by interface 18 in accordance with the above. For example, a list of cameras configured in the region R can be established, as at 102. A list of available video servers can be established as at 104.

Camera information can be obtained, as to the next camera to evaluate, as at 106. A video server can be obtained from the respective list as at 108. System 18 can determine if the resources of the respective server as available to provide service to the respective camera, as at 110. If so, that server can be associated with that camera as at 112.

Interface 18 can then determine if the list of cameras that need to be associated with a server is empty as at 114. If so, the process 100 can terminate, at least temporarily, and/or await additional inputs. If not. The identification of the next camera can be obtained from the list, as at 116, for processing. If the server resources are not available to service the current camera, as at 110, then the identification information for the next server on the list can be obtained, as at 118 for processing and evaluation.

Alternately, where the control circuits 24 have detected a server failure, as at 120, the cameras associated with that server can be added to the list of cameras to be processed for service, as at 122. That defective server can then be removed from the list of available servers, as at 124, and the cameras can be allocated among the remaining servers.

Those of skill in the art will understand that variations of the processing 100 come within the spirit and scope of the invention. The user can also request that additional cameras be added to the list of those needing service and such can be assigned to a server in accordance with processing 100 or a variation thereof.

In summary, advantages of embodiments of the invention include:
1. Users will perceive all video servers as a single integrated system;
2. Load sharing among the video servers will be available;
3. Video Server Failure mode scenarios will be ruled out;
4. Systems which embody the invention will be more scalable and adaptive to change;
5. All video servers will collaborate and be able to determine which server has enough resources to handle one or more cameras;
6. Over-all system performance will be improved;
7. Redundancy is inherent;
8. The addition of new cameras or video servers will be managed automatically by the system; and
9. Skilled individuals are not required to setup systems in accordance with the invention.
Even a novice will be able to use such systems efficiently.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. An apparatus comprising:
a plurality of view cameras;
a plurality of video servers; and
an interface coupled to the cameras and the servers, the interface maintaining a records of cameras that need service, and a record of available servers, the interface including circuitry automatically associates a camera with an available server.

2. An apparatus as in claim 1 which includes circuitry to determine if yet another camera needs service.

3. An apparatus as in claim 2 which includes a plurality of switches to selectively couple video camera output signals to a selected video server.

4. An apparatus as in claim 3 where the plurality of switches is configured as an m x n matrix switch where m corresponds to the number of cameras and n the number of servers.

5. An apparatus as in claim 4 where the interface includes a programmable processor coupled to the video cameras and the video servers.

6. An apparatus as in claim 5 which includes a computer readable storage medium, coupled to the processor, which carries a plurality of executable instructions to automatically carry out a camera allocation process.

7. An apparatus as in claim 5 where the processor maintains a list of cameras in need of service on the storage medium and a list of available video servers.

8. An apparatus as in claim 7 where the processor, responsive to sensing a failed server, automatically reallocates cameras among the remaining available servers.

9. An apparatus as in claim 8 wherein indicia of additional cameras can be added to the list of cameras, and responsive thereto, the processor will automatically allocated the additional cameras among the available servers.

10. A method comprising:
establishing at least one list of available cameras;
establishing at least one list of available video servers;
selecting a camera from the list;
selecting a server from the list and determining if the server is available to services the selected camera, and, responsive to determining, and
switching the camera's output to the selected server.

11. A method as in claim 10, where if the server can not service the selected camera, selecting another server.

12. A method as in claim 10 where switching includes establishing a transmission path between the selected camera and the selected server.

13. A method as in claim 10 which includes providing an m x n switch having m inputs and n outputs.

14. A method as in claim 10 which includes continually associated cameras with servers until all cameras are being serviced.

15. A method as in claim 10 which includes assigning a selected number of cameras to a common server.
